(19)

Europäisches
Patentamt
European
Patent Office
Office européen
des brevets

(11) **EP 4 664 813 A1**

(12) **EUROPEAN PATENT APPLICATION**
published in accordance with Art. 153(4) EPC

(43) Date of publication:
**17.12.2025 Bulletin 2025/51**

(21) Application number: **24753662.6**

(22) Date of filing: **08.02.2024**

(51) International Patent Classification (IPC):
**H04L 5/00** (2006.01)    **H04W 72/21** (2023.01)
**H04L 1/08** (2006.01)

(52) Cooperative Patent Classification (CPC):
**H04L 1/08; H04L 5/00; H04W 72/21**

(86) International application number:
**PCT/KR2024/001901**

(87) International publication number:
**WO 2024/167341 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 KR 20230018315**

(71) Applicant: **LG Electronics Inc.
Yeongdeungpo-gu
Seoul 07336 (KR)**

(72) Inventors:
• **SHIN, Seokmin**
  **Seoul 06772 (KR)**
• **PARK, Haewook**
  **Seoul 06772 (KR)**
• **KIM, Kijun**
  **Seoul 06772 (KR)**
• **YANG, Suckchel**
  **Seoul 06772 (KR)**
• **BAE, Duckhyun**
  **Seoul 06772 (KR)**

(74) Representative: **Plasseraud IP
104 Rue de Richelieu
CS92104
75080 Paris Cedex 02 (FR)**

(54) **DEVICE AND METHOD FOR CONFIGURING STARTING SYMBOL OF PUCCH REPEATED TRANSMISSION IN WIRELESS COMMUNICATION SYSTEM**

(57)    According to various embodiments of the present disclosure, there is provided a method of operating a user equipment (UE) in a wireless communication system, the method including transmitting, to a base station, a first physical uplink control channel (PUCCH) of multiple PUCCHs from an orthogonal frequency division multiplexing (OFDM) symbol S1 configured in a slot; performing a transmission of one or more PUCCHs subsequent to the first PUCCH of the multiple PUCCHs from a next OFDM symbol of a last OFDM symbol of a previous PUCCH; and performing a transmission from an OFDM symbol S2 configured for an X-th PUCCH among the multiple PUCCHs.

[FIG. 5]

**Description**

[Technical Field]

The present disclosure relates to a wireless communication system. More particularly, the present disclosure relates to a device and method for configuring a starting symbol of a PUCCH repetition transmission in a wireless communication system.

[Background Art]

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

If a UE in an initial access step successfully receives Msg. 4 PDSCH transmitted from a base station while performing a RACH procedure, the UE transmits HARQ-ACK information. In this instance, resources required for the UE to transmit PUCCH for Msg. 4 HARQ-ACK are predefined as initial PUCCH resource sets. The base station selects one of the defined initial PUCCH resource sets via RRC signaling and selects one PUCCH resource of the selected PUCCH resource set based on a specific field of DCI for scheduling Msg. 4 PDSCH and an CCE index of the DCI. The initial PUCCH resource set used in this case is defined in table 9.2.1-1 of clause 9.2.1 of 3GPP TS (technical standard) 38.213 specification.

Signals/channels considered in the existing NR system may not operate properly because they do not satisfy a target SNR in a specific environment (e.g., NTN). Characteristically, PUCCH formats defined in the initial PUCCH resource set may require enhancement, such as repetition transmission, in an NTN environment.

[Disclosure]

[Technical Problem]

In order to solve the above-described problems, the present disclosure provides a device and method for configuring a starting symbol of a PUCCH repetition transmission in a wireless communication system.

The present disclosure provides a device and method for configuring a starting OFDM symbol for each PUCCH format and repeatedly transmitting a PUCCH when a repetition transmission is applied to a PUCCH format defined in an initial PUCCH resource set in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system, the method comprising transmitting, to a base station, a first physical uplink control channel (PUCCH) of multiple PUCCHs from an orthogonal frequency division multiplexing (OFDM) symbol S1 configured in a slot; performing a transmission of one or more PUCCHs subsequent to the first PUCCH of the multiple PUCCHs from a next OFDM symbol of a last OFDM symbol of a previous PUCCH; and performing a transmission from an OFDM symbol S2 configured for an X-th PUCCH among the multiple PUCCHs.

According to various embodiments of the present disclosure, there is provided a method of operating a base station in a wireless communication system, the method comprising receiving, from a user equipment (UE), a first physical uplink control channel (PUCCH) of multiple PUCCHs from an orthogonal frequency division multiplexing (OFDM) symbol S1 configured in a slot; performing a reception of one or more PUCCHs subsequent to the first PUCCH of the multiple PUCCHs from a next OFDM symbol of a last OFDM symbol of a previous PUCCH; and performing a reception from an OFDM symbol S2 configured for an X-th PUCCH among the multiple PUCCHs.

According to various embodiments of the present disclosure, there is provided a user equipment (UE) in a wireless communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a wireless communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a wireless communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

[Advantageous Effects]

In order to solve the above-described problems, the present disclosure can provide a device and method for configuring a starting symbol of a PUCCH repetition transmission in a wireless communication system.

The present disclosure can provide a device and method for configuring a starting OFDM symbol for each PUCCH format and repeatedly transmitting a PUCCH when a repetition transmission is applied to a PUCCH format defined in an initial PUCCH resource set in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a structure of a radio frame used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of a process of performing a PUCCH repetition transmission in a system applicable to the present disclosure.

FIG. 6 illustrates an example of a process of performing a PUCCH repetition transmission in a system applicable to the present disclosure.

FIG. 7 illustrates an example of a process of performing a PUCCH repetition transmission in a system applicable to the present disclosure.

FIG. 8 illustrates an example of a process of performing a PUCCH repetition transmission in a system applicable to the present disclosure.

FIG. 9 illustrates an example of a process of performing a PUCCH repetition transmission in a system applicable to the present disclosure.

FIG. 10 illustrates an example of a process of performing a PUCCH repetition transmission in a system applicable to the present disclosure.

FIG. 11 illustrates an example of a process of performing a PUCCH repetition transmission in a system applicable to the present disclosure.

FIG. 12 illustrates an example of a process of performing a PUCCH repetition transmission in a system applicable to the present disclosure.

FIG. 13 illustrates an example of a process of performing a PUCCH repetition transmission in a system applicable to the present disclosure.

FIG. 14 illustrates an example of a process of performing a PUCCH repetition transmission in a system applicable to the present disclosure.

FIG. 15 illustrates an example of a process of performing a PUCCH repetition transmission in a system applicable to the present disclosure.

FIG. 16 illustrates an example of a process of performing a PUCCH repetition transmission in a system applicable to the present disclosure.

FIG. 17 illustrates an example of a process of operating a UE in a system applicable to the present disclosure.

FIG. 18 illustrates an example of a process of operating a base station in a system applicable to the present disclosure.

FIG. 19 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

**General Signal Transmission Method in 3GPP**

**Physical Channels and General Signal Transmission**

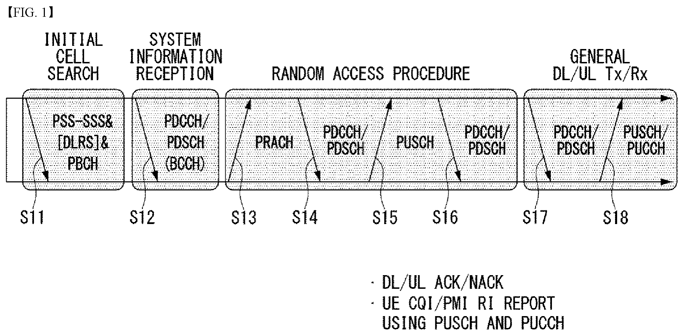

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

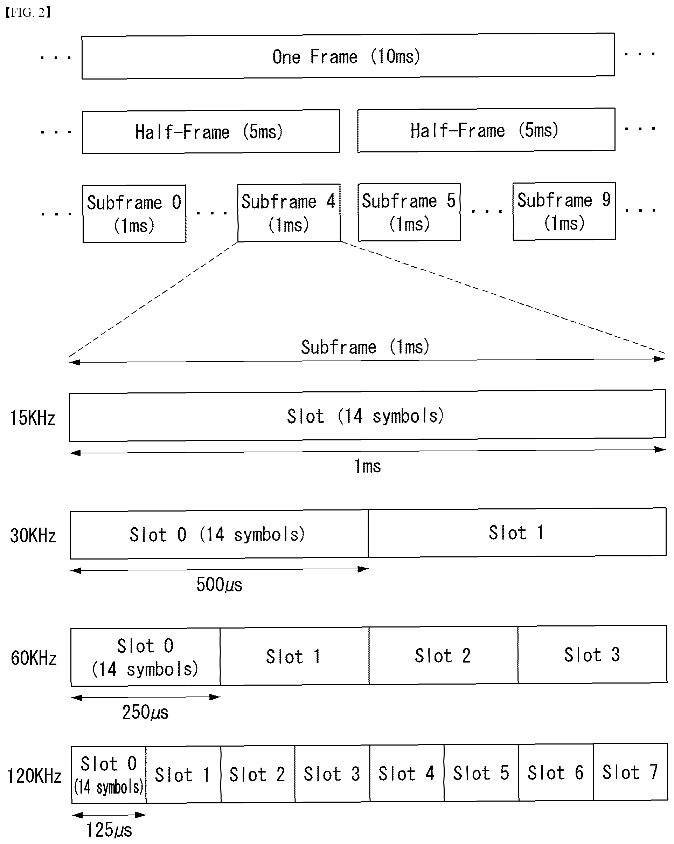

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{stot}_{symb}$ is the number of symbols in the slot. $N^{frame,u}_{slot}$ is the number of slots in the frame. $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting diverse 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

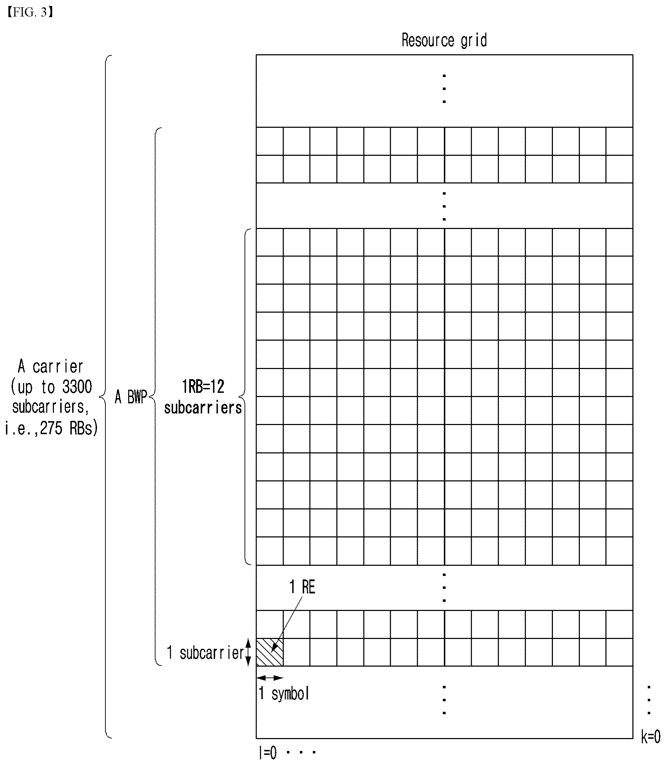

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

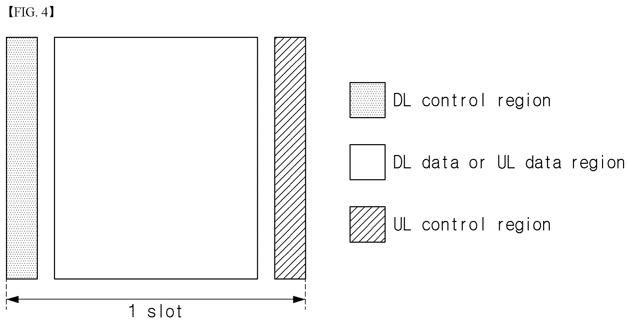

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

## Composition and Method of the Invention

NR frame structure, RACH, U-Band system, etc. can be applied by being combined with methods described in the present disclosure, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or the U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell and/or a U-cell defined in the NR system or the U-Band system.

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

If a UE in an initial access step successfully receives Msg. 4 PDSCH transmitted from a base station while performing a RACH procedure, the UE transmits HARQ-ACK information. In this instance, resources required for the UE to transmit PUCCH for Msg. 4 HARQ-ACK are predefined as initial PUCCH resource sets. The base station selects one of the defined initial PUCCH resource sets via RRC signaling and selects one PUCCH resource of the selected PUCCH resource set based on a specific field of DCI for scheduling Msg. 4 PDSCH and an CCE index of the DCI. The initial PUCCH resource set used in this case is defined in table 9.2.1-1 of clause 9.2.1 of 3GPP TS (technical standard) 38.213 specification. Table 5 shows Table 9.2.1-1: PUCCH resource sets before dedicated PUCCH resource configuration of 3GPP TS 38.213.

[Table 5]

| Index | PUCCH format | First symbol | Number of symbols | PRB offset $RB_{\mathrm{BWP}}^{\mathrm{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

Signals/channels considered in the existing NR system may not operate properly because they do not satisfy a target SNR in a specific environment (e.g., NTN). Characteristically, PUCCH formats defined in the initial PUCCH resource set may require enhancement, such as repetition transmission, in an NTN environment. That is, the present disclosure proposes a starting OFDM symbol configuration for each PUCCH format and UE/base station operations related thereto, when repetition transmission is applied to the PUCCH formats defined in the initial PUCCH resource set.

## 1. Repetition transmission method capable of applying per PUCCH format

As defined in table 9.2.1-1 of 3GPP TS 38.213 specification of Table 5, there are a total of two types of PUCCH formats of a PUCCH resource set used before a UE is allocated a dedicated PUCCH resource from a base station: PUCCH format 0 and PUCCH format 1. In this case, the PUCCH format 1 is subdivided into three types based on the number of OFDM symbols occupied by the PUCCH format 1. That is, as a result, the PUCCH resource set includes four combinations of PUCCH format 0 with 2 OFDM symbols, PUCCH format 1 with 4 OFDM symbols, PUCCH format 1 with 10 OFDM symbols, and PUCCH format 1 with 14 OFDM symbols. In this instance, when PUCCH repetition is applied to the PUCCH resource set, various repetition transmission methods may be proposed for each of the combinations.

Characteristically, one method of the following proposed methods (or a combination of multiple methods) may be equally applied/defined to all PUCCH format combinations of a PUCCH resource set used before the UE is allocated a dedicated PUCCH resource from the base station, or one method of the following proposed methods (or a combination of multiple methods) may be individually applied/defined for each PUCCH format combination. Further, if a repetition number is set/indicated to 1 from the base station, it may be defined to follow an existing single PUCCH transmission method (i.e., starting OFDM symbol). For example, a symbol level repetition (or symbol level + slot level repetition) may be applied for PUCCH format 0 and/or PUCCH format 1 with 4 OFDM symbols, and a slot level repetition may be applied for PUCCH format 1 with 10 OFDM symbols and/or PUCCH format 1 with 14 OFDM symbols.

### 1.1 [Proposed Method 11 Slot level repetition

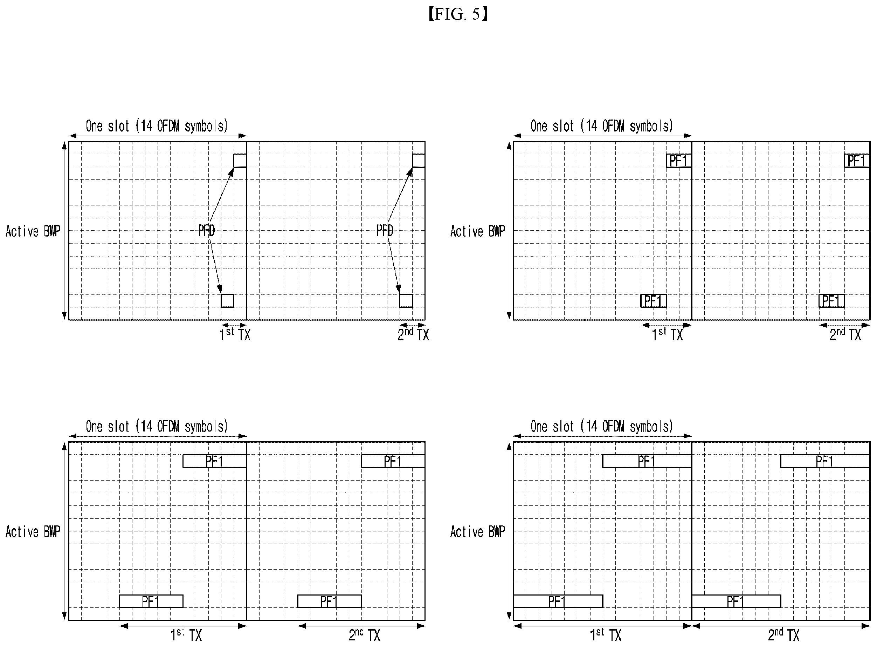

FIG. 5 illustrates an example of a process of performing a PUCCH repetition transmission in a system applicable to the present disclosure.

It is possible to consider a method of repeatedly transmitting a PUCCH format transmitted in an existing single UL slot at a slot level while keeping a transmission location within the slot as it is. That is, a base station may configure/indicate a UE to repeatedly transmit a PUCCH via higher layer signaling, etc., and if the UE is configured/indicated by the base station to repeatedly transmit the PUCCH, the UE may be defined to perform a repetition transmission at the slot level. Characteristically, the PUCCH repetition transmission may be performed in consecutive UL slots (or consecutive and valid UL slots). In addition, the UE may be defined to equally use a starting OFDM symbol for each of the existing defined PUCCH formats even in a first transmission and a repetition transmission.

FIG. 5 illustrates an example of performing a slot level repetition for each PUCCH format. More specifically, FIG. 5 illustrates a slot level repetition assuming that a frequency hopping (FH) is enabled and repetition number N = 2.

However, if the proposed method is used, there is a problem that the remaining preceding OFDM symbols cannot be used by the UE after transmitting the PUCCH in some PUCCH format combinations (e.g., PUCCH format 0, PUCCH format 1 with 4 OFDM symbols, etc.). In addition, if the number of slots required for repetition transmission increases, the time required for the entire repetition transmission increases by the increased slots, and hence, the probability that the UL TA will be changed in the middle of the repetition transmission increases. Therefore, as UE/base station operations for handling this, a method of indicating a UL segment that configures the base station to continue transmission without changing the UL TA may be introduced. In addition, a value of the UL segment may be set in conjunction with the PUCCH repetition number indicated (or predefined) by the base station. For example, if the PUCCH repetition number is N (N>1), a region corresponding to the UL segment may be configured to be N/k slot (e.g., k is a positive integer of 1, 2, 4, 8, etc.). In this instance, the base station may indicate the k value together with a higher layer parameter indicating PUCCH repetition transmission configuration information (e.g., repetition number set, etc.), and the UE may determine that the UL segment value is indicated by receiving the k value.

If the time required for repetition transmission increases and a situation occurs where the UE needs to change the UL TA in the middle of the repetition transmission, a method may be considered in which the UE performs PUCCH repetition transmission only as many times as it can transmit without changing the UL TA and drops the remaining PUCCHs. For example, the base station may configure/indicate a segment (e.g., UL segment), that can be transmitted without changing the UL TA, via higher layer signaling (e.g., SIB, etc.). Alternatively, a value of the segment may be preset based on an NTN satellite orbit type. For example, the segment may be configured small in the case of LEO, and large in the case of MEO or GEO. In this case, the base station may also know in advance that the UE will perform the PUCCH repetition transmission only within a specific duration, and thus there is an advantage in that there is no need to receive the remaining PUCCH repetition transmission, and the base station can use the corresponding resources for other usages.

### 1.2 [Proposed Method 21 Symbol level repetition

Since the probability of UL TA change increases when a large number of slots are used for PUCCH repetition as in the proposed method 1, a method of performing PUCCH repetition transmission in the shortest possible time (i.e., using the smallest number of slots) may be considered. In this case, the probability of UL TA change during the PUCCH repetition transmission relatively decreases, and thus the UE can transmit UL TA without changing the UL TA throughout the PUCCH repetition transmission.

However, the current 3GPP TS 38.213 specification defines only a starting OFDM symbol for a single transmission for each PUCCH format. Therefore, it is necessary to define how to configure the starting OFDM symbol for repetition transmission for each PUCCH format.

**1.2.1 [Proposed Method 2-A] Method of applying an existing defined method to a starting OFDM symbol of a first transmitted PUCCH and transmitting a remaining repetition transmission using consecutive OFDM symbols**

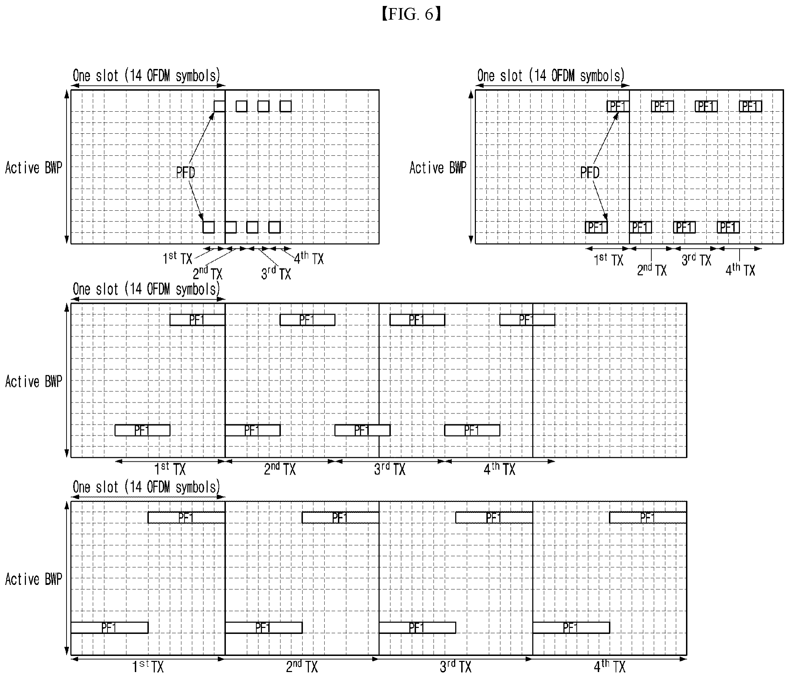

FIG. 6 illustrates an example of a process of performing a PUCCH repetition transmission in a system applicable to the present disclosure.

First, a starting OFDM symbol of a first transmitted PUCCH may be configured to reuse the values defined in Table 9.2.1-1 of the existing 3GPP TS 38.213 specification (i.e., follow the existing method), and transmissions from a second PUCCH transmission may be configured to start from an OFDM symbol (i.e., consecutive OFDM symbol) immediately following the end of the immediately preceding transmission. This can be expressed graphically as FIG. 6. FIG. 6 illustrates a symbol level repetition when [Method 2-A] is applied, frequency hopping is enabled, and repetition number N = 4. Characteristically, in the PUCCH format 1 with 14 OFDM symbols, the starting OFDM symbol is 0 from the beginning and always occupies 14 symbols, so the slot level repetition and the symbol level repetition produce the same result.

Using this method, the number of slots required for repetition transmission of some PUCCH format combinations (e.g., PUCCH format 0, PUCCH format 1 with 4 OFDM symbols, etc.) is greatly reduced. This reduces the time used for the entire repetition transmission, which has the advantage that the UL TA value set by the UE does not need to be changed in the middle of the repetition transmission. However, in the PUCCH format 1 with 10 OFDM symbols, there is a disadvantage that PUCCH OFDM symbols are transmitted across a slot boundary. In addition, since time at which the repetition transmission ends may be in the middle of the slot not the slot boundary, the remaining OFDM symbols of the corresponding slot may not be used by the corresponding UE.

Alternatively, among the methods described above, the starting OFDM symbol of the first PUCCH transmission may be defined to start from a first OFDM symbol of a slot allocated/configured by the base station, not the values defined in Table 9.2.1-1 of the existing 3GPP TS 38.213 specification. More specifically, if the base station configures/indicates the UE to perform the PUCCH repetition transmission, the UE may be configured to perform a first PUCCH transmission in a first OFDM symbol (i.e., OFDM symbol index 0) of an allocated slot, and start transmissions from a second PUCCH transmission from an OFDM symbol (i.e., consecutive OFDM symbol) immediately following the end of the immediately preceding transmission.

**1.2.2 [Proposed Method 2-B] Method of configuring a starting OFDM symbol of a first PUCCH transmission so that a last PUCCH repetition transmission is a slot boundary and transmitting a remaining repetition transmission using a consecutive OFDM symbol**

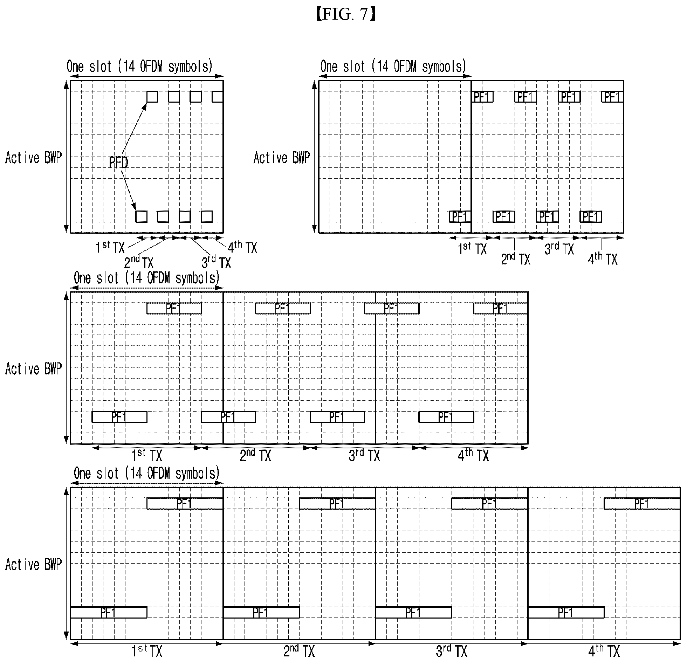

FIG. 7 illustrates an example of a process of performing a PUCCH repetition transmission in a system applicable to the present disclosure.

Next, the UE may be configured to configure a starting OFDM symbol of a first PUCCH transmission so that a last PUCCH repetition transmission ends in a slot boundary and start transmissions from a second PUCCH transmission from an OFDM symbol (i.e., consecutive OFDM symbol) immediately following the end of the immediately preceding transmission. For example, if the PUCCH repetition number is N and the number of OFDM symbols required for a single transmission for each specific PUCCH format combination is M, a starting OFDM symbol S of a first PUCCH transmission of the corresponding PUCCH format combination may be defined as in Equation 1.

【Equation 1】

$$S = \mathrm{mod}\,(14 - \mathrm{mod}\,(N \times M, 14), 14)$$

Or, values currently considered as N may be 1, 2, 4, and 8. Among the values, 1 is not a repetition transmission and thus is excluded, and {2, 4, 8} may be considered as the N value. When considering all PUCCH format combinations of a PUCCH resource set used before the UE is allocated a dedicated PUCCH resource from the base station, the possible M values are 2, 4, 10, and 14. Among the values, the case where M = 14 has the same result from the symbol level repetition and the slot level repetition, so '14' is excluded and {2, 4, 10} may be considered as M. Therefore, the N × M values that can be obtained using N = {2, 4, 8} and M = {2, 4, 10} are calculated as shown in Table 6 below. Table 6 shows the N × M values that can be obtained using N = {2, 4, 8} and M = {2, 4, 10}.

[Table 6]

| N × M | N = 2 | N = 4 | N = 8 |
|---|---|---|---|
| PF0 (M = 2) | 4 | 8 | 16 |
| PF1 with 4 symbols (M = 4) | 8 | 16 | 32 |
| PF1 with 10 symbols (M = 10) | 20 | 40 | 80 |

As described above, if the N × M values have only a result that is not a multiple of 14, the S value can be defined as in Equation 2.

【Equation 2】

$$S = 14 - \mathrm{mod}\,(N \times M, 14)$$

Finally, the S value is calculated as in Table 3-2 using Equation 1 or Equation 2. If the N × M values are not a multiple of 14, the S values obtained through Equation 1 and Equation 2 are the same. For example, if the case of N=4 and M=10 is calculated using Equation 1, S=mod(14-mod(4*10, 14), 14)=2 is obtained, and if the case of N=4 and M=10 is calculated using Equation 2, S=14-mod(4*10, 14)=2 is obtained.

Table 7 shows the S values that can be obtained using N = {2, 4, 8} 과 M = {2, 4, 10}.

[Table 7]

| S | N = 2 | N = 4 | N = 8 |
|---|---|---|---|
| PF0 (M = 2) | 10 | 6 | 12 |
| PF1 with 4 symbols (M = 4) | 6 | 12 | 10 |
| PF1 with 10 symbols (M = 10) | 8 | 2 | 4 |

An example using the calculated S value is expressed as in FIG. 7. FIG. 7 illustrates a symbol level repetition assuming that [Method 2-B] is applied, frequency hopping is enabled, and repetition number N = 4. In the PUCCH format 1 with 14 OFDM symbols, the starting OFDM symbol is 0 from the beginning and always occupies 14 symbols, so the same result comes out this time as well.

### 1.2.3 [Proposed Method 2-C] Method in which a base station configures/indicates and applies a starting OFDM symbol of a first transmitted PUCCH via a specific signal/channel (e.g., SIB, Msg. 2 PDCCH/PDSCH, RAR, Msg. 4 PDCCH/PDSCH, etc.) and transmits a remaining repetition transmission using consecutive OFDM symbols

A method in which a base station configures/indicates a starting OFDM symbol of a first PUCCH transmission via a specific signal/channel (e.g., SIB, Msg. 2 PDCCH/PDSCH, RAR, Msg. 4 PDCCH/PDSCH, etc.) may be considered. More specifically, if the base station configures/indicates the starting OFDM symbol of the first PUCCH transmission via the specific signal/channel, etc., a UE may be configured to perform the first PUCCH transmission in a configured/indicated OFDM symbol of an allocated slot and start transmissions from a second PUCCH transmission subsequent to the first PUCCH transmission from an OFDM symbol (i.e., consecutive OFDM symbol) immediately following the end of the immediately preceding transmission. This has an advantage of increasing a freedom of resource management of the base station.

The [Method 2-A] and/or the [Method 2-B] and/or the [Method 2-C] have a feature that specific PUCCH OFDM symbols are transmitted across a slot boundary. In this instance, since the transmission in this manner may cause implementation problems during the UE transmission or the base station reception, a method of dropping or postponing the PUCCH OFDM symbols that fall across the slot boundary may be considered. If a dropping method is considered, dropping all specific PUCCH repetition transmissions transmitted across the slot boundary (i.e., specific PUCCH repetition transmissions regardless of whether frequency hopping is performed) may also be considered. Alternatively, based on whether the frequency hopping is performed, a method of dropping only hops transmitted across the slot boundary and transmitting remaining hops as it is may be considered. Or, if a postponing method is considered, specific PUCCH repetition transmissions transmitted across the slot boundary may be configured/defined to start from a first OFDM symbol of the immediately following slot, and a subsequent PUCCH repetition transmission may be configured/defined to start from an OFDM symbol immediately following the completion of the immediately preceding PUCCH transmission.

### 1.3 [Proposed Method 31 Slot level + Symbol level repetition

As a method to take the advantages of both the proposed methods 1 and 2, a method of simultaneously applying a slot level repetition transmission and a symbol level repetition transmission may be considered.

### 1.3.1 [Proposed Method 3-A] Method of configuring/defining starting OFDM symbols of a first PUCCH transmission and other PUCCH transmissions so that a last PUCCH format transmission in a slot boundary is terminated while preventing a specific repetition transmission from being transmitted across two consecutive slots

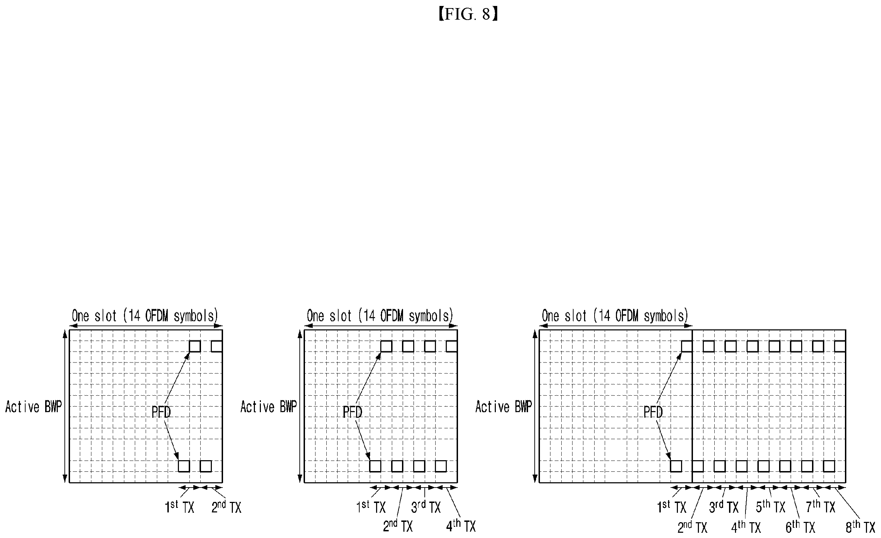

FIG. 8 illustrates an example of a process of performing a PUCCH repetition transmission in a system applicable to the present disclosure.

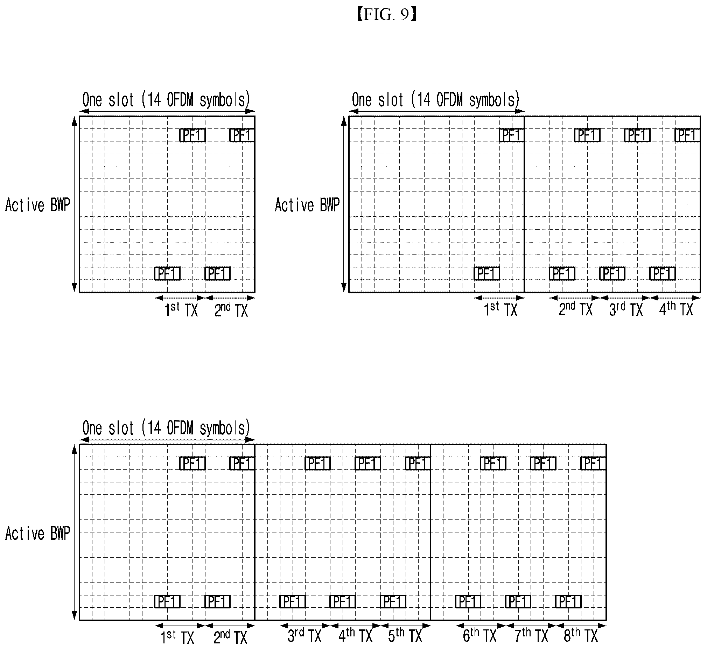

FIG. 9 illustrates an example of a process of performing a PUCCH repetition transmission in a system applicable to the present disclosure.

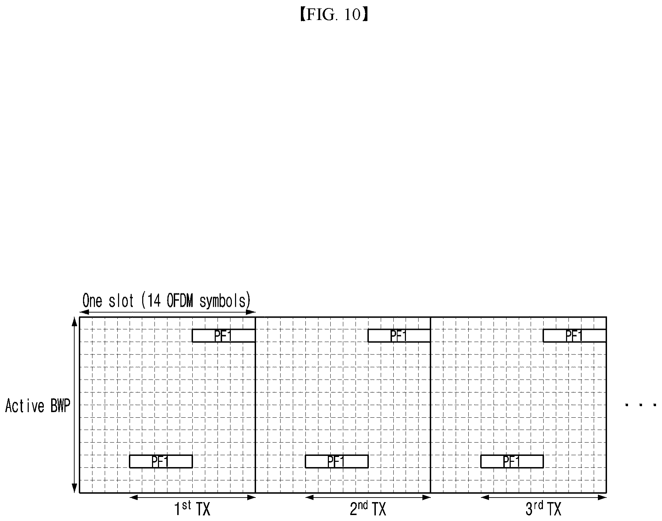

FIG. 10 illustrates an example of a process of performing a PUCCH repetition transmission in a system applicable to the present disclosure.

The method may configure/define starting OFDM symbols of a first PUCCH transmission and other PUCCH transmissions so that a last PUCCH format transmission in a slot boundary is terminated while preventing a specific repetition transmission from being transmitted across two consecutive slots. For example, a starting OFDM symbol of the first PUCCH transmission may be configured/defined to be S1, a starting OFDM symbol of an X-th PUCCH transmission may be configured/defined to be S2, and remaining PUCCH transmissions may be configured to start from an OFDM symbol immediately following the end of the immediately preceding transmission (i.e., consecutive OFDM symbols). In this instance, S1 value, S2 value, and values that can be X may be set/indicated by the base station via a specific signal/channel, etc., or may be predefined so the UE and the base station know in advance.

An example using this method is illustrated in FIGS. 8, 9, and 10. FIGS. 8, 9, and 10 illustrate situations in which the [Method 3-A] is applied, frequency hopping is enabled, and multiple repetition numbers (e.g., N=2, 4, 8) are assumed, respectively. FIG. 8 illustrates PUCCH format 0 (N = 2, 4, 8). FIG. 9 illustrates PUCCH format 1 with 4 OFDM symbols (N = 2, 4, 8). FIG. 10 illustrates PUCCH format 1 with 10 OFDM symbols (N = 2, 4, 8). Characteristically, in the PUCCH format 1 with 10 OFDM symbols, if the starting OFDM symbol is not changed, applying the proposed method 3 and applying the slot level repetition have the same result.

When applied as in the examples of FIGS. 8, 9, and 10, the values of S1, S2, and X based on the repetition number may be defined as in Tables 8, 9, and 10, respectively. Table 8 shows an example of the values of S1, S2, and X when the repetition number N=2. Table 9 shows an example of the values of S1, S2, and X when the repetition number N=4. Table 10 shows an example of the values of S1, S2, and X when the repetition number N=8.

[Table 8]

|  | S1 (starting OFDM symbol index of first PUCCH transmission) | X | S2 (starting OFDM symbol index of X-th PUCCH transmission) |
|---|---|---|---|
| PF0 (M = 2) | 10 | - | - |
| PF1 with 4 symbols (M = 4) | 6 | - | - |
| PF1 with 10 symbols (M = 10) | 4 | 2 | 4 |

[Table 9]

|  | S1 (starting OFDM symbol index of first PUCCH transmission) | X | S2 (starting OFDM symbol index of X-th PUCCH transmission) |
|---|---|---|---|
| PF0 (M = 2) | 6 | - | - |
| PF1 with 4 symbols (M = 4) | 10 | 2 | 2 |
| PF1 with 10 symbols (M = 10) | 4 | 2, 3, 4 | 4 |

[Table 10]

|  | S1 (starting OFDM symbol index of first PUCCH transmission) | X | S2 (starting OFDM symbol index of X-th PUCCH transmission) |
|---|---|---|---|
| PF0 (M = 2) | 12 | 2 | 0 |
| PF1 with 4 symbols (M = 4) | 6 | 3, 6 | 2 |
| PF1 with 10 symbols (M = 10) | 4 | 2, 3, 4, 5, 6, 7, 8 | 4 |

A method, which has the same result as the [Method 3-A] but is a slightly different method, may define the starting OFDM symbol for the first PUCCH transmission per repetition number and/or per PUCCH format, and may additionally define an OFDM symbol gap for a specific PUCCH transmission expected to be repeatedly transmitted across the slot boundary per repetition number and/or per PUCCH format.

### 1.3.2 [Proposed Method 3-B] Method of configuring/defining a first PUCCH transmission to start in a slot boundary and configuring/defining starting OFDM symbols of other PUCCH transmissions while preventing a specific repetition transmission from being transmitted across two consecutive slots

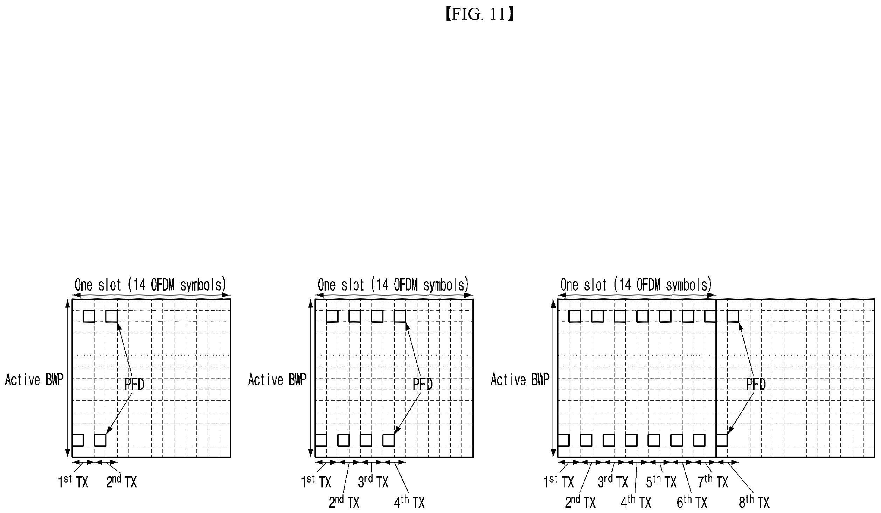

FIG. 11 illustrates an example of a process of performing a PUCCH repetition transmission in a system applicable to the present disclosure.

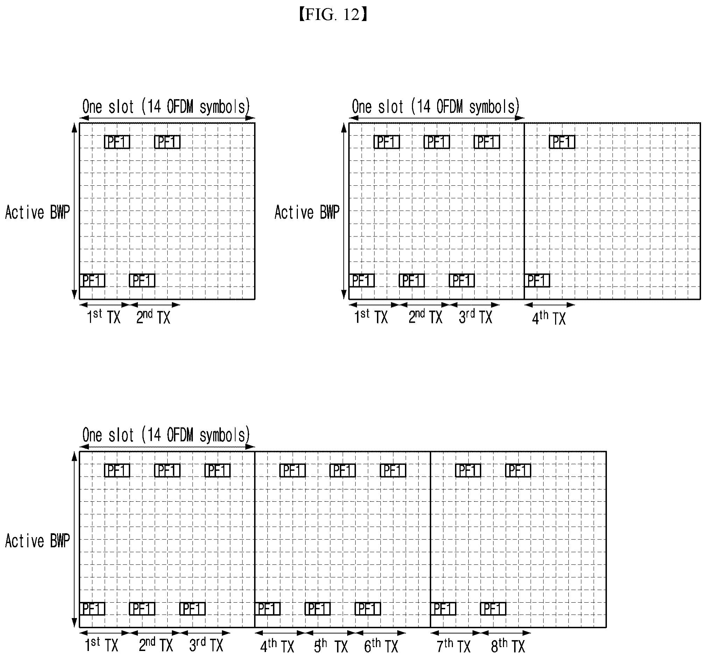

FIG. 12 illustrates an example of a process of performing a PUCCH repetition transmission in a system applicable to the present disclosure.

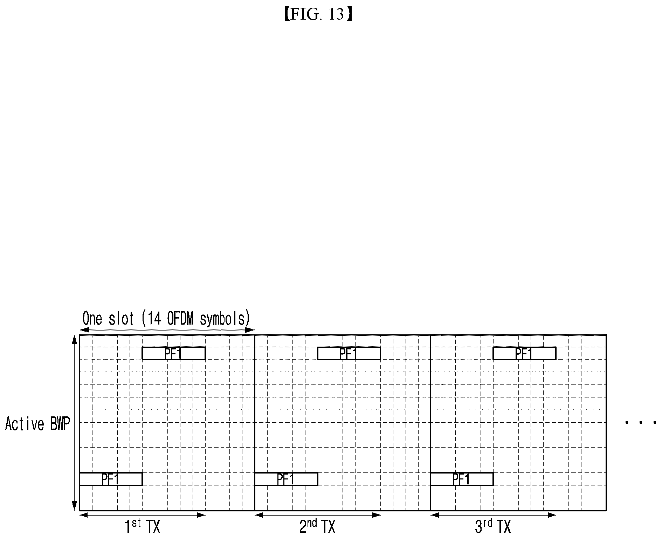

FIG. 13 illustrates an example of a process of performing a PUCCH repetition transmission in a system applicable to the present disclosure.

A method, which is similar to the [Method 3-A] but is a slightly different method, may configure a starting OFDM symbol (i.e., symbol index 0) of a first PUCCH transmission so that a PUCCH repetition transmission starts in a slot boundary. In this method, a default operation of subsequent PUCCH repetition transmissions is to start from an OFDM symbol immediately following the end of the immediately preceding transmission. However, if there are not enough OFDM symbols (i.e., M OFDM symbols) to transmit a specific PUCCH repetition transmission in a corresponding slot to prevent a specific repetition transmission from being transmitted across two consecutive slots, a next PUCCH transmission may be configured/defined to start from a very first OFDM symbol of the immediately following slot.

For example, the starting OFDM symbol of the first PUCCH transmission may be configured/defined to be a first OFDM symbol, a starting OFDM symbol of an X-th PUCCH transmission may also be configured/defined to be the first OFDM symbol, and remaining PUCCH transmissions may be configured to start from an OFDM symbol immediately following the end of the immediately preceding transmission (i.e., consecutive OFDM symbols). In this instance, values that can be X may be set/indicated by the base station via a specific signal/channel, etc., or may be predefined so that the UE and the base station know in advance.

An example using this method is illustrated in FIGS. 11, 12, and 13. FIGS. 11, 12, and 13 illustrate situations in which the [Method 3-B] is applied, frequency hopping is enabled, and multiple repetition numbers (e.g., N = 2, 4, 8) are assumed, respectively. FIG. 11 illustrates PUCCH format 0 (N = 2, 4, 8). FIG. 12 illustrates PUCCH format 1 with 4 OFDM symbols (N = 2, 4, 8). FIG. 13 illustrates PUCCH format 1 with 10 OFDM symbols (N = 2, 4, 8).

When applied as in the examples of FIGS. 11, 12, and 13, the values of X based on the repetition number may be defined as in Table 11. Table 11 shows an example of the values of X when the repetition number N=2, 4, 8.

[Table 11]

| X | N=2 | N=4 | N=8 |
|---|---|---|---|
| PF0 (M = 2) | - | - | 8 |
| PF1 with 4 symbols (M = 4) | - | 4 | 4, 7 |
| PF1 with 10 symbols (M = 10) | 2 | 2, 3, 4 | 2, 3, 4, 5, 6, 7, 8 |

### 1.3.3 [Proposed Method 3-C] Method of configuring/defining a first PUCCH transmission to start in a slot boundary while preventing a specific repetition transmission from being transmitted across two consecutive slots, and configuring/defining starting OFDM symbols of other PUCCH transmissions while maintaining a location of an existing initial PUCCH resource

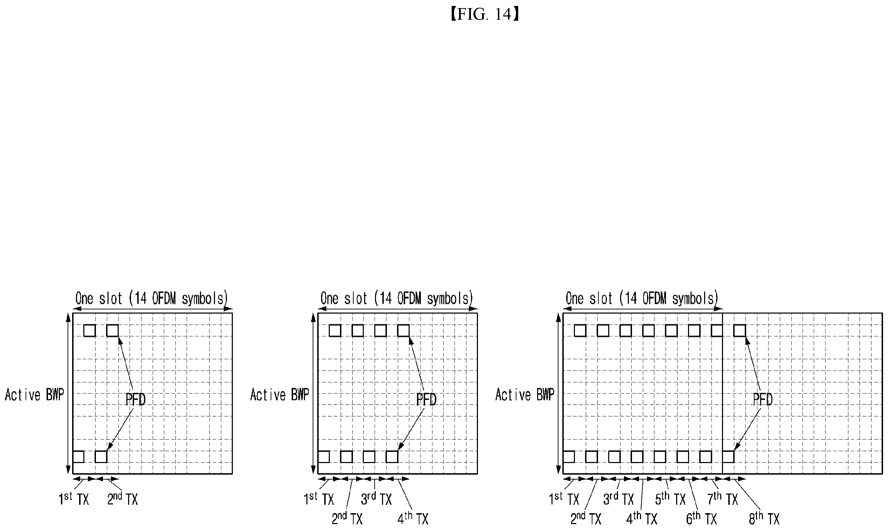

FIG. 14 illustrates an example of a process of performing a PUCCH repetition transmission in a system applicable to the present disclosure.

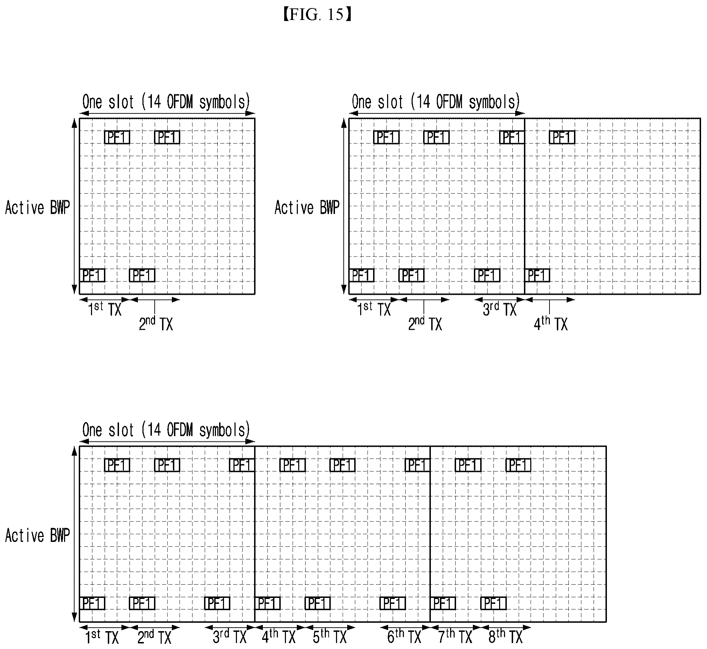

FIG. 15 illustrates an example of a process of performing a PUCCH repetition transmission in a system applicable to the present disclosure.

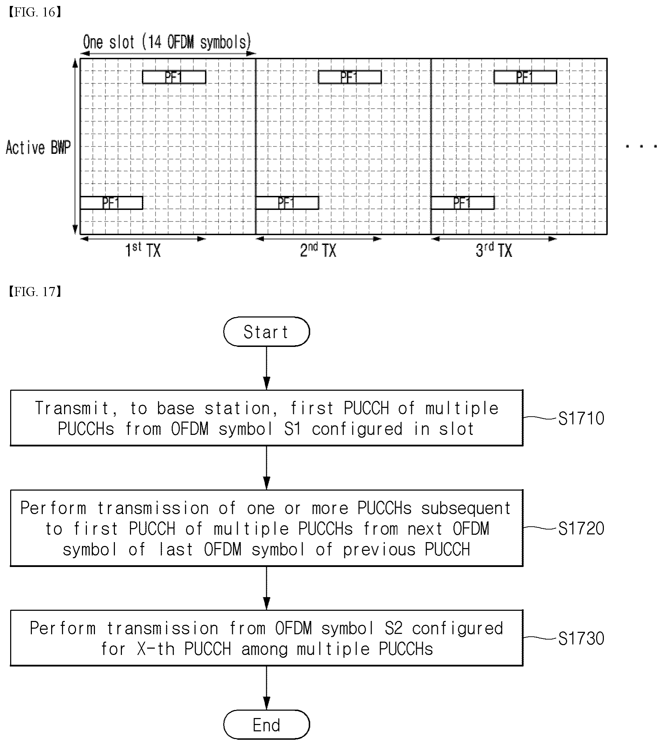

FIG. 16 illustrates an example of a process of performing a PUCCH repetition transmission in a system applicable to the present disclosure.

A method, which is similar to the [Method 3-B] but is a slightly different method, may configure a starting OFDM symbol (i.e., symbol index 0) of a first PUCCH transmission so that a PUCCH repetition transmission starts in a slot boundary. In this method, a default operation of subsequent PUCCH repetition transmissions is to start from an OFDM symbol immediately following the end of the immediately preceding transmission. However, if there are not enough OFDM symbols (i.e., M OFDM symbols) to transmit a specific PUCCH repetition transmission in a corresponding slot to prevent a specific repetition transmission from being transmitted across two consecutive slots, a next PUCCH transmission may be configured/defined to start from a very first OFDM symbol of the immediately following slot, and the starting OFDM symbol may be configured/defined so that the immediately preceding PUCCH repetition transmission can be terminated in the slot boundary.

For example, the starting OFDM symbol of the first PUCCH transmission may be configured/defined to be a first OFDM symbol, a starting OFDM symbol of an X-th PUCCH transmission may also be configured/defined to be the first OFDM symbol, a starting OFDM symbol of a Y-th PUCCH transmission may also be configured/defined based on an existing setting value (i.e., value defined in table 9.2.1-1 of 3GPP TS 38.213 specification), and remaining PUCCH transmissions may be configured to start from an OFDM symbol immediately following the end of the immediately preceding transmission (i.e., consecutive OFDM symbols). In this instance, values that can be X or Y may be set/indicated by the base station via a specific signal/channel, etc., or may be predefined so that the UE and the base station know in advance.

An example using this method is illustrated in FIGS. 14, 15, and 16. FIGS. 14, 15, and 16 illustrate situations in which the [Method 3-C] is applied, frequency hopping is enabled, and multiple repetition numbers (e.g., N = 2, 4, 8) are assumed, respectively. FIG. 14 illustrates PUCCH format 0 (N = 2, 4, 8). FIG. 15 illustrates PUCCH format 1 with 4 OFDM symbols (N = 2, 4, 8). FIG. 16 illustrates PUCCH format 1 with 10 OFDM symbols (N = 2, 4, 8).

### 1.4 [Proposed Method 4] Sub-slot level repetition

It may be considered to introduce a sub-slot level PUCCH repetition method introduced targeting a UE that enters a connected mode in NR URLLC to a PUCCH repetition transmission for the UE before receiving dedicated PUCCH resources.

As a specific method, a sub-slot length defined in the current spec is {2, 7, 14} OFDM symbols. Considering the sub-symbol length and the number M of OFDM symbols required for a single transmission for each specific PUCCH format combination, an appropriate sub-slot length may be selected for each PUCCH format combination to perform a sub-slot level PUCCH repetition. In this instance, it can be defined to select the largest sub-slot length that is less than or equal to the M value. Characteristically, in this case, it may be defined to allow only one PUCCH transmission among multiple PUCCH repetition transmissions within a specific sub-slot.

For example, the M value is 2 for PUCCH format 0, 4 for PUCCH format 1 with 4 OFDM symbols, 10 for PUCCH format 1 with 10 OFDM symbols, and 14 for PUCCH format 1 with 14 OFDM symbols. Therefore, repetition transmission unit may be determined by selecting the sub-slot length as 2 when M=2, selecting the sub-slot length as 7 when M=4, and selecting the sub-slot length as 14 when M=10 and M=14. Afterwards, the UE may be configured to repeatedly transmit the sub-slot as many times as the repetition number N configured by the base station.

Characteristically, in the case of the above operation, it is necessary to newly define a starting OFDM symbol within a specific sub-slot for each PUCCH format combination. For example, in order to always terminate a repetition transmission in a sub-slot boundary, the sub-slot length and a starting OFDM symbol index for each PUCCH format combination may be defined as in Table 12. As can be seen in Table 12, the starting OFDM symbol index may be a value obtained by subtracting the M value from the sub-slot length. That is, in the PUCCH format 0, M=2 and the sub-slot length 2 may be selected, so the starting OFDM symbol index may be 2-2=0. Similarly, in the PUCCH format 1 with 4 OFDM symbols, M=4 and the sub-slot length 7 may be selected, so the starting OFDM symbol index may be 7-4=3. Table 12 shows examples of appropriate sub-slot length and starting OFDM symbol values for each PUCCH format.

[Table 12]

|  | Sub-slot length | Starting OFDM symbol index |
|---|---|---|
| PF0 (M = 2) | 2 | 0 |
| PF1 with 4 symbols (M = 4) | 7 | 3 |
| PF1 with 10 symbols (M = 10) | 14 | 4 |
| PF1 with 14 symbols (M = 14) | 14 | 0 |

For another example, the repetition transmission may be configured to always start in the sub-slot boundary. That is, the PUCCH transmission may be configured to always start in the very first OFDM symbol of the sub-slot.

## 2. Whether to apply sequence hopping in PUCCH repetition transmission

If intra slot frequency hopping is enabled during the existing single PUCCH transmission, PUCCH sequence hopping is defined to operate between a 1st hop and a 2nd hop. In this instance, if PUCCH repetition transmission is considered, it is necessary to determine whether to support the sequence hopping.

First, a method may be considered in which the same sequence hopping scheme is applied to all PUCCH format combinations and/or all repetition numbers. That is, the simplest method is to define that PUCCH sequence hopping operates when the base station enables intra slot frequency hopping in PUCCH repetition transmission, as in the existing single PUCCH transmission. This method has the advantage of being the simplest and can be applied immediately without any changes. However, this method may have a disadvantage in that in a specific case (e.g., symbol level repetition, etc.) when multiple PUCCHs are repeatedly transmitted within a single slot, a sequence shall be transmitted alternately between the 1st hop and the 2nd hop. As another method, unlike the single PUCCH transmission, it can be defined that PUCCH sequence hopping does not operate in the PUCCH repetition transmission, regardless of whether the intra slot frequency hopping is enabled/disabled.

Alternatively, if different repetition types are applied based on each PUCCH format combination and/or repetition number value, a method in which sequence hopping is also differently applied based on different repetition methods may be considered. That is, if a specific PUCCH format combination applies the slot level repetition (or if another method is applied but results in the slot level repetition), the PUCCH sequence hopping may be defined to operate when frequency hopping is enabled in the same manner as the existing single PUCCH transmission. If a specific PUCCH format combination applies symbol level repetition or symbol level + slot level repetition, etc., the PUCCH sequence hopping may be configured not to operate even if frequency hopping is enabled.

The proposed methods can be configured/applied to other UL signals/channels such as PRACH/PUSCH/-PUCCH. Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

## [Description of claims related to UE]

Below, the above-described embodiments are described in detail from a perspective of an operation of a UE with reference to FIG. 17. Methods to be described below are merely distinguished for convenience of explanation. Thus, as long as the methods are not mutually exclusive, it is obvious that partial configuration of any method can be substituted or combined with partial configuration of another method.

FIG. 17 illustrates an example of an operation process of a UE in a system applicable to the present disclosure.

In step S1710, a UE transmits, to a base station, a first physical uplink control channel (PUCCH) of multiple PUCCHs from an orthogonal frequency division multiplexing (OFDM) symbol S1 configured in a slot.

In step S1720, the UE performs a transmission of one or more PUCCHs subsequent to the first PUCCH of the multiple PUCCHs from a next OFDM symbol of a last OFDM symbol of a previous PUCCH.

In step S1730, the UE performs a transmission from an OFDM symbol S2 configured for an X-th PUCCH among the multiple PUCCHs.

According to various embodiments of the present disclosure, information of the S1, the S2, and the X may be received from the base station, or may be pre-shared between the UE and the base station.

According to various embodiments of the present disclosure, a transmission of a last PUCCH within the slot among the multiple PUCCHs may be terminated in a last boundary of the slot.

According to various embodiments of the present disclosure, the multiple PUCCHs may be alternately transmitted in a first frequency domain and a second frequency domain.

According to various embodiments of the present disclosure, the multiple PUCCHs are not transmitted across two consecutive slots and may be transmitted in only one slot.

According to various embodiments of the present disclosure, a transmission of the multiple PUCCHs may be repeated at a slot level.

According to various embodiments of the present disclosure, a transmission of the multiple PUCCHs may be repeated at a symbol level.

According to various embodiments of the present disclosure, the number of OFDM symbols occupied by each of the multiple PUCCHs may be configured.

According to various embodiments of the present disclosure, there is provided a user equipment (UE) in a wireless communication system. The UE may include a transceiver and at least one processor, and the at least one processor may be configured to perform the operation method of the UE based on FIG. 17.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 17 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 17.

## [Description of claims related to BS]

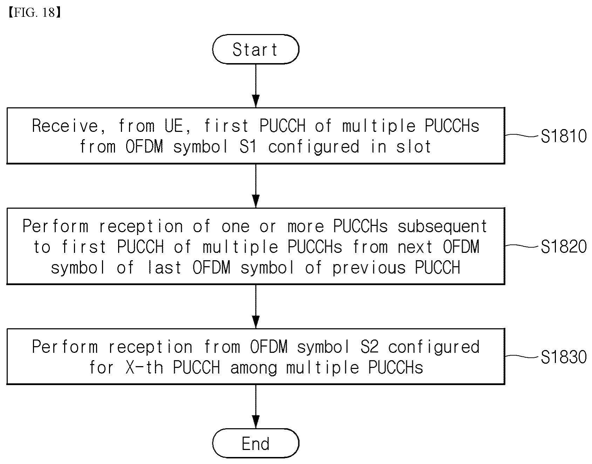

Below, the above-described embodiments are described in detail from a perspective of an operation of a base station with reference to FIG. 18. Methods to be described below are merely distinguished for convenience of explanation. Thus, as long as the methods are not mutually exclusive, it is obvious that partial configuration of any method can be substituted or combined with partial configuration of another method.

FIG. 18 illustrates an example of an operation process of a base station in a system applicable to the present disclosure.

In step S1810, a base station receives, from a UE, a first physical uplink control channel (PUCCH) of multiple PUCCHs from an orthogonal frequency division multiplexing (OFDM) symbol S1 configured in a slot.

In step S1820, the base station performs a reception of one or more PUCCHs subsequent to the first PUCCH of the multiple PUCCHs from a next OFDM symbol of a last OFDM symbol of a previous PUCCH.

In step S1830, the base station performs a reception from an OFDM symbol S2 configured for an X-th PUCCH among the multiple PUCCHs.

According to various embodiments of the present disclosure, information of the S1, the S2, and the X may be transmitted to the UE from the base station, or may be pre-shared between the UE and the base station.

According to various embodiments of the present disclosure, a reception of a last PUCCH within the slot among the multiple PUCCHs may be terminated in a last boundary of the slot.

According to various embodiments of the present disclosure, the multiple PUCCHs may be alternately received in a first frequency domain and a second frequency domain.

According to various embodiments of the present disclosure, the multiple PUCCHs are not received across two consecutive slots and may be received in only one slot.

According to various embodiments of the present disclosure, a reception of the multiple PUCCHs may be repeated at a slot level.

According to various embodiments of the present disclosure, a reception of the multiple PUCCHs may be repeated at a symbol level.

According to various embodiments of the present disclosure, the number of OFDM symbols occupied by each of the multiple PUCCHs may be configured.

According to various embodiments of the present disclosure, there is provided a base station in a wireless communication system. The base station may include a transceiver and at least one processor, and the at least one processor may be configured to perform the operation method of the BS based on FIG. 18.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 18 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 18.

**Wireless device applicable to the present disclosure**

Examples of wireless devices to which various embodiments of the present disclosure are applied are described below.

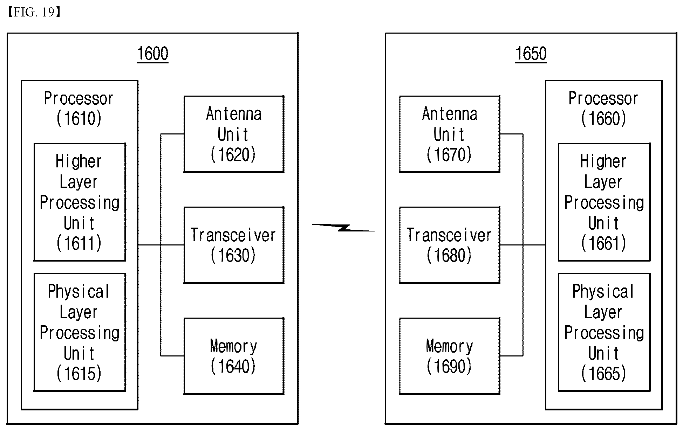

FIG. 19 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:

   transmitting, to a base station, a first physical uplink control channel (PUCCH) of multiple PUCCHs from an orthogonal frequency division multiplexing (OFDM) symbol S1 configured in a slot;
   performing a transmission of one or more PUCCHs subsequent to the first PUCCH of the multiple PUCCHs from a next OFDM symbol of a last OFDM symbol of a previous PUCCH; and
   performing a transmission from an OFDM symbol S2 configured for an X-th PUCCH among the multiple PUCCHs.

2. The method of claim 1, wherein information of the S1, the S2, and the X is received from the base station or is pre-shared between the UE and the base station.

3. The method of claim 1, wherein a transmission of a last PUCCH within the slot among the multiple PUCCHs is terminated in a last boundary of the slot.

4. The method of claim 1, wherein the multiple PUCCHs are alternately transmitted in a first frequency domain and a second frequency domain.

5. The method of claim 1, wherein the multiple PUCCHs are not transmitted across two consecutive slots and are transmitted in only one slot.

6. The method of claim 1, wherein a transmission of the multiple PUCCHs is repeated at a slot level, and wherein the transmission of the multiple PUCCHs is repeated at a symbol level.

7. The method of claim 1, wherein a number of OFDM symbols occupied by each of the multiple PUCCHs is configured.

8. A method of operating a base station in a wireless communication system, the method comprising:

   receiving, from a user equipment (UE), a first physical uplink control channel (PUCCH) of multiple PUCCHs from an orthogonal frequency division multiplexing (OFDM) symbol S1 configured in a slot;

performing a reception of one or more PUCCHs subsequent to the first PUCCH of the multiple PUCCHs from a next OFDM symbol of a last OFDM symbol of a previous PUCCH; and

performing a reception from an OFDM symbol S2 configured for an X-th PUCCH among the multiple PUCCHs.

9. The method of claim 8, wherein information of the S1, the S2, and the X is transmitted to the UE from the base station or is pre-shared between the UE and the base station.

10. The method of claim 8, wherein a reception of a last PUCCH within the slot among the multiple PUCCHs is terminated in a last boundary of the slot.

11. The method of claim 8, wherein the multiple PUCCHs are alternately received in a first frequency domain and a second frequency domain.

12. The method of claim 8, wherein the multiple PUCCHs are not received across two consecutive slots and are received in only one slot.

13. The method of claim 8, wherein a reception of the multiple PUCCHs is repeated at a slot level, and wherein the reception of the multiple PUCCHs is repeated at a symbol level.

14. The method of claim 8, wherein a number of OFDM symbols occupied by each of the multiple PUCCHs is configured.

15. A user equipment (UE) in a wireless communication system, the UE comprising:

a transceiver;
at least one processor; and
at least one memory operably connectable to the at least one processor and storing instructions performing operations based on being executed by the at least one processor,
wherein the operations comprise all steps of a method according to any one of claims 1 to 7.

16. A base station in a wireless communication system, the base station comprising:

a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,

wherein the one or more instructions perform operations based on being executed by one or more processors, and
wherein the operations comprise all steps of a method according to any one of claims 1 to 7.

**20.** One or more non-transitory computer readable mediums storing one or more instructions,

wherein the one or more instructions perform operations based on being executed by one or more processors, and

wherein the operations comprise all steps of a method according to any one of claims 8 to 14.

[FIG. 1]

INITIAL
CELL
SEARCH

SYSTEM
INFORMATION
RECEPTION

RANDOM ACCESS PROCEDURE

GENERAL
DL/UL Tx/Rx

| PSS-SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S11   S12   S13   S14   S15   S16   S17   S18

· DL/UL ACK/NACK
· UE CQI/PMI RI REPORT
  USING PUSCH AND PUCCH

【FIG. 2】

【FIG. 3】

Resource grid

A carrier
(up to 3300
subcarriers,
i.e.,275 RBs)

A BWP

1RB=12
subcarriers

1 RE

1 subcarrier

1 symbol

l=0 · · ·

k=0

【FIG. 4】

1 slot

DL control region

DL data or UL data region

UL control region

[FIG. 5]

【FIG. 6】

**[FIG. 7]**

【FIG. 8】

EP 4 664 813 A1

One slot (14 OFDM symbols)

Active BWP

PFD

1st TX    2nd TX

One slot (14 OFDM symbols)

Active BWP

PFD

1st TX    3rd TX
   2nd TX    4th TX

One slot (14 OFDM symbols)

Active BWP

PFD

1st TX    3rd TX    5th TX    7th TX
   2nd TX    4th TX    6th TX    8th TX

**[FIG. 9]**

【FIG. 10】

One slot (14 OFDM symbols)

Active BWP

PF1  PF1  PF1

PF1  PF1  PF1

1st TX    2nd TX    3rd TX    . . .

[FIG. 11]

**【FIG. 12】**

EP 4 664 813 A1

[FIG. 13]

EP 4 664 813 A1

【FIG. 14】

[FIG. 15]

【FIG. 16】

One slot (14 OFDM symbols)

Active BWP

PF1  PF1  PF1

PF1  PF1  PF1

1st TX    2nd TX    3rd TX

【FIG. 17】

Start

Transmit, to base station, first PUCCH of multiple PUCCHs from OFDM symbol S1 configured in slot — S1710

Perform transmission of one or more PUCCHs subsequent to first PUCCH of multiple PUCCHs from next OFDM symbol of last OFDM symbol of previous PUCCH — S1720

Perform transmission from OFDM symbol S2 configured for X-th PUCCH among multiple PUCCHs — S1730

End

[FIG. 18]

```
                        ╭─────────────╮
                        │    Start    │
                        ╰──────┬──────╯
                               │
                               ▼
┌─────────────────────────────────────────────────────┐
│  Receive, from UE, first PUCCH of multiple PUCCHs    │──S1810
│     from OFDM symbol S1 configured in slot           │
└─────────────────────────────┬───────────────────────┘
                               │
                               ▼
┌─────────────────────────────────────────────────────┐
│  Perform reception of one or more PUCCHs subsequent  │
│   to first PUCCH of multiple PUCCHs from next OFDM    │──S1820
│     symbol of last OFDM symbol of previous PUCCH      │
└─────────────────────────────┬───────────────────────┘
                               │
                               ▼
┌─────────────────────────────────────────────────────┐
│  Perform reception from OFDM symbol S2 configured    │──S1830
│        for X-th PUCCH among multiple PUCCHs          │
└─────────────────────────────┬───────────────────────┘
                               │
                               ▼
                        ╭─────────────╮
                        │     End     │
                        ╰─────────────╯
```

【FIG. 19】

## INTERNATIONAL SEARCH REPORT

| International application No. |
|---|
| **PCT/KR2024/001901** |

**A. CLASSIFICATION OF SUBJECT MATTER**

**H04L 5/00**(2006.01)i; **H04W 72/21**(2023.01)i; **H04L 1/08**(2006.01)i

According to International Patent Classification (IPC) or to both national classification and IPC

**B. FIELDS SEARCHED**

Minimum documentation searched (classification system followed by classification symbols)

H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUCCH 반복(repetition), OFDM 심볼(symbol), 슬롯(slot), 레벨(level)

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. PUCCH coverage enhancement. R1-2008182, 3GPP TSG RAN WG1 #103-e. 01 November 2020. See pages 4-5 and figure 2. | 1-3,5-10,12-20 |
| Y | | 4,11 |
| Y | CATT. Discussion on PUCCH enhancements. R1-2111274, 3GPP TSG RAN WG1 #107-e. 06 November 2021. See page 1 and figure 1. | 4,11 |
| A | INTEL CORPORATION. On potential techniques for PUCCH coverage enhancement. R1-2007955, 3GPP TSG RAN WG1 #103-e. 01 November 2020. See pages 1-10. | 1-20 |
| A | PANASONIC. Discussion on PUCCH coverage enhancements. R1-2006349, 3GPP TSG RAN WG1 #102-e. 07 August 2020. See pages 1-3. | 1-20 |
| A | KR 10-2017-0078591 A (LG ELECTRONICS INC.) 07 July 2017 (2017-07-07) See paragraphs [0124]-[0138] and figure 11. | 1-20 |

☐ Further documents are listed in the continuation of Box C.  ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 May 2024** | **29 May 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001901**

| Patent document cited in search report | | | Publication date (day/month/year) | Patent family member(s) | | | Publication date (day/month/year) |
|---|---|---|---|---|---|---|---|
| KR | 10-2017-0078591 | A | 07 July 2017 | CN | 107113137 | A | 29 August 2017 |
| | | | | CN | 107113137 | B | 29 September 2020 |
| | | | | EP | 3214793 | A2 | 06 September 2017 |
| | | | | EP | 3214793 | A4 | 30 May 2018 |
| | | | | EP | 3214793 | B1 | 26 June 2019 |
| | | | | EP | 3525384 | A1 | 14 August 2019 |
| | | | | EP | 3525384 | B1 | 24 March 2021 |
| | | | | JP | 2017-534193 | A | 16 November 2017 |
| | | | | JP | 2020-005265 | A | 09 January 2020 |
| | | | | JP | 6880119 | B2 | 02 June 2021 |
| | | | | KR | 10-2134877 | B1 | 26 August 2020 |
| | | | | US | 10231220 | B2 | 12 March 2019 |
| | | | | US | 10863488 | B2 | 08 December 2020 |
| | | | | US | 2017-0245265 | A1 | 24 August 2017 |
| | | | | US | 2019-0159200 | A1 | 23 May 2019 |
| | | | | WO | 2016-068542 | A2 | 06 May 2016 |
| | | | | WO | 2016-068542 | A3 | 23 June 2016 |

Form PCT/ISA/210 (patent family annex) (July 2022)